Europäisches Patentamt

European Patent Office

Office européen des brevets

(19)

(11) Publication number: **0 294 171**
A2

# (12) EUROPEAN PATENT APPLICATION

(21) Application number: 88304993.4

(22) Date of filing: 01.06.88

(51) Int. Cl.⁴: **B 62 D 25/16**

(30) Priority: 03.06.87 GB 8713038

(43) Date of publication of application:
07.12.88 Bulletin 88/49

(84) Designated Contracting States:
BE DE FR GB IT NL SE

(71) Applicant: HEYDAY INSULATION LIMITED
6, Strickland Street
Hull North Humberside, HU3 4AQ (GB)

(72) Inventor: Henry, Gerard Thomas
67 Ruskin Avenue
Middlesborough TS5 8PG (GB)

(74) Representative: McCall, John Douglas et al
H. L. Cottreil & Co. Kings Building South Church Side
Hull North Humberside, HU1 1RR (GB)

The title of the invention has been amended (Guidelines for Examination in the EPO, A-III, 7.3).

(54) Insulated vehicle wheel box and method of producing same.

㊄ An insulated vehicle wheel box comprised of moulded polyurethane structural foam (1, 2) and a method of producing same. One or more edges of the wheel box define an integral flange portion (4), whereby the wheel box moulding can be secured in position, and reinforcing members (3) are provided within the structural polyurethane foam (1, 2).

Fig 1.

## Description

## AN INSULATED VEHICLE WHEEL BOX

The present invention relates to an insulated vehicle wheel arch or box and more particularly to an insulated vehicle wheel box for use in caravans and other types of wheel mounted portable home. The present invention also relates to a method of producing an insulated vehicle wheel box.

Wheel boxes for use in caravans are known which are simply comprised of shaped sheet metal screwed, riveted or otherwise secured in place in openings in the sides of the caravan. Usually, the wheel bos extends into the interior of the caravan and, by virtue of the fact that sheet metal has a low thermal insulation value, it provides an ideal site for the formation of condesation within the caravan. In this respect, caravans are especially prone to condensation because of their generally poor ventilation and the use of bottled gas to provide heating. It will be readily appreciated that over an extended period of time condensation can cause much damage to the fabric of a caravan; wet rot can form in woodwork, fungal growths can develop and metal can rust.

In an effort to reduce condensation and improve the quality, durability and comfort of caravans greater use has been made of insulating materials in the caravans walls, floor and ceiling. However, due to their shape and the fact that they are often awkwardly positioned there has been a tendency to neglect satisfactory insulation of the caravan wheel boxes.

German Patent No. 773737, Reiss International GmbH, discloses an insulated wheel box for caravans which is comprised of an inner core of polyurethane foam sandwiched between two shaped outer shells. The polyurethane foam, which has excellent heat insulation properties, is protected from the adverse physical conditions which exist in the region of the wheel box by the outer shells, and these outer shells also provide securing flanges whereby the wheel box can be secured in position. Although this insulated wheel box is, in use, highly effective, it is, however, complicated to produce and expensive. The outer shells, both of which are slightly different in shape, to accommodate the inner and outer dimensions of the wheel box, must first be formed from thermoplastically deformable sheets. The outer shells must then be supported, slightly apart from each other, whilst polyurethane foam is introduced to fill the gap between them.

It is an object of the present invention to provide an insulated vehicle wheel box which can be manufactured as a single integral unit.

It is a further object of the present invention to provide an insulated vehicle wheel box which is resistant to wear and tear, corrosion and other generally adverse conditions of use.

According to a first aspect of the present invention is provided an insulated vehicle wheel box comprised of moulded polyurethane structural foam.

Polyurethane structural foam, which is also sometimes referred to as integral foam or integral skin foam, is an expanded polymeric crosslinked material characterised by a hard, tough and smooth outer surface formed in combination with a low density cellular core to create a sandwiched structure. It is formed by a liquid reaction injection moulding (RIM) process during which two low viscosity liquids, a polyol blend and an organic isocyanate are mixed, in a predetermined ratio, in either a low pressure or a high pressure mixing head from which the required quantity is injected into a temperature controlled mould. The temperature whithin the mould is typically 50 - 60 C and the moulding pressure may be anything from 1 to 6 kg/cm. Cycle times of 3 to 10 minutes can be achieved depending on the thickness of the moulding and this facilitates mass production of the insulated vehicle wheel box of the present invention. The moulds themselves may be comprised of steel, aluminium, Kirksite, silicone rubber, GRP or epoxy resin.

The polyol blend may comprise any one of a variety of agents that control the chemical reaction during production of the moulding. One of these is the blowing agent that is evaporated by the heat of the exothermic reaction to make the reacting mixture foam, fill the mould and hence create the sturctural typical of polyurethane structural foam.

It is known to use polyurethane structural foam in a wide variety of applications, but typically these involve the mass production of moulded articles in which the thermal insulation properties of the material are of no importance to the suitability of the article to perform its designated function. These articles include amongst other things items of furniture, skis and plasterer's levelling trowels. In these articles the primary requirements fulfilled by the material are strength combined with lightness.

Polyurethane structural foam combines high flexural strength with low height. The high density outer skin ensures that it is resistant to dilute alkalis, organic acids, dilute inorganic acids and hydrocarbon solvents which is of particular importance in a vehicle wheel box where very adverse physical and chemical conditions are experienced by the surface of the wheel box actually exposed to the road. The cellular inner core provides excellent thermal insulation properties.

Advantageously, one or more edges of the wheel box define an integral flange portion whereby the wheel box can be secured to the caravan frome with bolts, screws, adhesives, or other fixing means. This flange is formed by narrowing the thickness of the mould in which the wheel box is formed so that the structural polyurethane foam is prevented from tumescing and fully expending in that vicinity.

Conveniently, reinforcing members can be introduced into the mould immediately before it is filled with the reacting material. These reinforcing members may take the form of metal or plastic rods or mesh which become integrally incorporated within the polyurethane structural foam as it expands to fill the mould.

According to a second aspect of the present invention there is provided a method of producing an insulated vehicel wheel box in accordance with the first aspect of the present invention wherein a blend of polyfunctional polyol, a blowing agent and an organic isocyanate are introduced into a temperature controlled mould in the shape of a vehicle wheel box and the mould is heated to initiate a spontaneous and exothermic reaction, thereby producing a vehicle wheel box comprised of moulded structural polyurethane foam.

An embodiment of the present invention will now be described, by way of example, with reference to the accompanying drawings, in which:

Fig. 1 shows a sectional view through a portion of a structural polyurethane foam moulding of an insulated vehicle wheel box according to the present invention; and

Fig. 2 shows graphically the typical variation in density through a structural foam section.

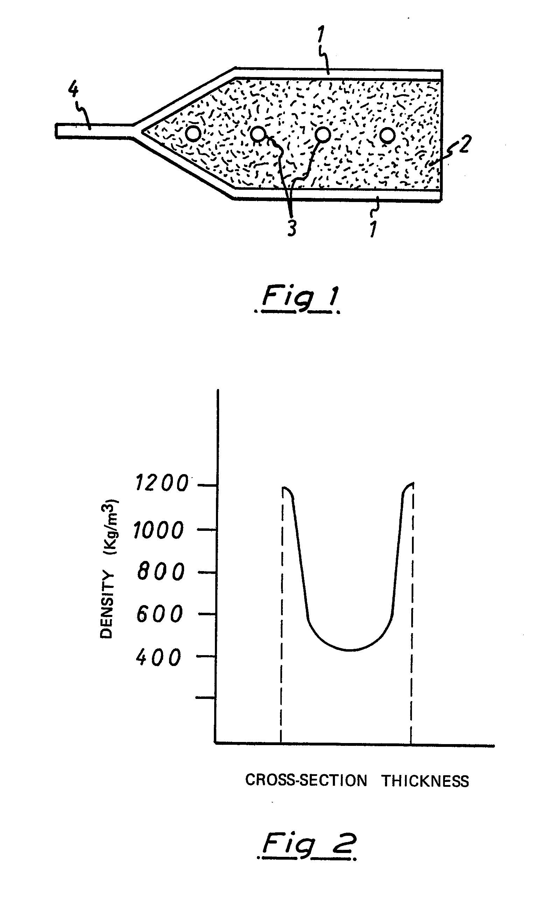

Referring to the acocmpanying drawings it can be seen that structural polyurethane foam comprises a low density cellular core 1 enveloped by a high density outer surface 2. The cellular core 1 and the outer surface 2 are not separate components, but form a continuum in which the density of the material increases from the middle outwards as illustrated in the graph of Fig. 2. In a vehicle wheel box the high density outer surface 2 provides resistance to physical abuse and chemical attack, whilst the low density cellular core provides excellent thermal insulation properties.

Structural polyurethane foam mouldings are produced in temperature controlled moulds of generally conventional design. However, it is envisaged that regions of reduced thickness, high density material may be formed in the mouldings to facilitate securement. In this respect, the space defined between the upper and lower surfaces of the moulding can be reduced to prevent the blend of reacting materials from which polyurethane structural foam is produced expanding fully and thereby produce a region of high density material. Where the region of high density material extends along the edge of the moulding it forms a rigid flange 3 which can be used to secure the mould in use. Reinforcing members 4 can be introduced into the mould immediately before it is filled with the blend of reacting materials. These reinforcing members 4 take the form of metal or plastic rods or mesh which become integrally incorporated within the polyurethane structural foam as it expands to fill the mould.

**Claims**

1. An insulated vehicle wheel box comprised of moulded polyurethane structural foam.

2. An insulated vehicle wheel box according to claim 1, wherein one or more edges thereof define an integral flange portion, whereby the wheel box can be secured in position.

3. An insulated vehicle wheel box according to claim 1 or 2, wherein reinforcing members are provided within the structural polyurethane foam.

4. An insulated vehicle wheel box according to claim 3, wherein the reinforcing members are comprised of metal or plastic rods or mesh.

5. A method of producing an insulated vehicle wheel box wherein a blend of polyfunctional polyol, a blowing agent and an organic isocyanate are introduced into a temperature controlled mould in the shape of a vehicle wheel box and the mould is heated to initiate a spontaneous and exothermic reation, thereby producing a vehicle wheel box comprised of moulded structural polyurethane foam.

6. A method of producing an insulated vehicle wheel box according to claim 5, wherein the thickness of the mould is reduced to define a region of thin high density material.

7. A method of producing an insulated vehicle wheel box according to claim 5 or 6, wherein reinforcing members are introduced into the mould immediately before it is filled with the blend of reacting material.

Fig 1.

Fig 2.